(19) Europäisches Patentamt / European Patent Office / Office européen des brevets

(11) **EP 4 042 469 B1**

(12) **EUROPEAN PATENT SPECIFICATION**

(45) Date of publication and mention
of the grant of the patent:
**24.07.2024 Bulletin 2024/30**

(21) Application number: **20789016.1**

(22) Date of filing: **30.09.2020**

(51) International Patent Classification (IPC):
**H01J 49/42** $^{(2006.01)}$

(52) Cooperative Patent Classification (CPC):
**H01J 49/424**

(86) International application number:
**PCT/EP2020/077433**

(87) International publication number:
**WO 2021/064060 (08.04.2021 Gazette 2021/14)**

(54) **ION TRAP WITH TOROIDAL ION STORAGE CELL AND MASS SPECTROMETER**

IONENFALLE MIT TOROIDFÖRMIGER IONENSPEICHERZELLE UND MASSENSPEKTROMETER

PIÈGE À IONS AVEC CELLULE DE STOCKAGE IONIQUE TOROIDALE ET SPECTROMÈTRE DE MASSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2019 DE 102019215148**

(43) Date of publication of application:
**17.08.2022 Bulletin 2022/33**

(73) Proprietor: **Leybold GmbH**
**50968 Köln (DE)**

(72) Inventors:
• **ALIMAN, Michel**
**73447 Oberkochen (DE)**
• **BRACHTHAUSER, Yessica**
**73447 Oberkochen (DE)**
• **LAUE, Alexander**
**73447 Oberkochen (DE)**
• **CHUNG, Anthony Hin Yiu**
**73447 Oberkochen (DE)**

(74) Representative: **Norton, Ian Andrew**
**Edwards Limited**
**Innovation Drive**
**Burgess Hill, West Sussex RH15 9TW (GB)**

(56) References cited:
US-A- 5 625 186        US-A1- 2004 079 880
US-A1- 2013 214 152    US-A1- 2016 042 935
US-B2- 6 891 157

• LAMMERT S A ET AL: "Design, optimization and initial performance of a toroidal rf ion trap mass spectrometer", INTERNATIONAL JOURNAL OF MASS SPECTROMETRY, ELSEVIER SCIENCE PUBLISHERS , AMSTERDAM, NL, vol. 212, no. 1-3, 15 November 2001 (2001-11-15), pages 25 - 40, XP004339989, ISSN: 1387-3806, DOI: 10.1016/S1387-3806(01)00507-3
• JI Q ET AL: "A segmented ring, cylindrical ion trap source for time-of-flight mass spectrometry", JOURNAL OF THE AMERICAN SOCIETY FOR MASS SPECTROMETRY, ELSEVIER SCIENCE INC, US, vol. 7, no. 10, 1 October 1996 (1996-10-01), pages 1009 - 1017, XP004697686, ISSN: 1044-0305, DOI: 10.1016/1044-0305(96)00044-X

EP 4 042 469 B1

**Description**

Background to the invention

The invention relates to a (Fourier transform) ion trap, comprising: a first ring-shaped end cap electrode and a second ring-shaped end cap electrode, between which is formed a ring-shaped ion storage cell. The ion trap is thus a circular or toroidal ion trap. The invention also relates to a mass spectrometer with such an ion trap.

The patent US 9,035,245 B2 describes a mass spectrometer with an electrical FT ion trap. The FT ion trap has a ring electrode and two end cap electrodes with, respectively, hyperbolic geometry, between which is formed a non-ring-shaped ion storage cell that is delimited by the hyperbolic electrodes. As a rule, the two end cap electrodes are connected to virtual ground potential, whilst an HF storage signal in the form of a high-frequency alternating current is applied to the ring electrode.

Through the HF storage signal, an electrical field (quadrupole field) is created in the ion trap, which enables it to store ions or charged particles in a stable manner in the ion trap.

As an alternative to an ion trap with the geometry of a hyperbolic quadrupole or Paul trap, in the article "A novel electric ion resonance cell design with high signal-to-noise ratio and low distortion for Fourier transform mass spectrometry" by M. Aliman and A. Glasmachers, in the Journal of the American Society for Mass Spectrometry, vol. 10, no. 10, October 1999, a different geometry is proposed: the ring electrode is replaced by a cylinder of disk-shaped ring electrodes which extends in the axial direction from the first to the second end cap electrode. The ring electrodes are arranged equidistant in the axial direction. The resulting ion storage cell forms a cylinder with a hyperbolic base and a hyperbolic cap. With the aid of this ion trap, it is possible to reduce crosstalk currents which occur between the end cap electrodes and the ring electrode in the case of a conventional Paul trap.

In a three-dimensional FT ion trap, many functions can be carried out *in situ,* e.g. ion selection or ion filtering, ion storage, ion excitation and ion detection. From US 10,141,174 B2, the practice is known of carrying out in such an FT ion trap, in the creation and storage of ions and/or in the excitation of ions before the detection of the ions, at least one selective IFT ("Inverse Fourier Transform") excitation depending on the mass-to-charge ratio of the ions, in particular a SWIFT ("Stored Wave Form Inverse Fourier Transform") excitation. Selective SWIFT excitation can, in particular, be used for the selection of ions or for ion filtering. For the separation of the ion populations stored in the FT ion trap, wavelet and/or FFT techniques can be used. In the detection of ions, noise-detection techniques can be used.

For the detection of ions, measurement signals produced at the end cap electrodes can be used which are produced by mirror charges. In a mass spectrometer, mass spectra can be rapidly calculated from the measurement signals with the aid of Fast Fourier Transform (FFT) or with the aid of methods such as harmonic inversion, cf. e.g. "Harmonic inversion of semiclassical short time signals", F. Grossmann et al., Chem. Phys. Lett. 279 (1997) 355-360. The sensitivity of ion trap mass spectrometers is also high. These performance features are necessary in many applications, for example in order to detect an end point quickly and precisely from the gas composition in a semiconductor process (so-called End Point Detection application).

In the case of an FT ion trap too, however, there are some challenges to be overcome during the measurement procedure. These relate for example to the maximum ionic charge of the ion trap and/or the ratio of the storable majority charge carriers to the minority charge carriers and the selectivity during ion filtration or ion production, the filter characteristic of the ion trap itself, as well as the separation and detection of the ion species of interest.

The characteristics of such a compact mass spectrometer or such an ion trap can be severely impaired and limited by too great an ionic charge. For example, low ion concentrations of e.g. 100 ppb cannot be demonstrated unless ion filtration of a background gas, e.g. nitrogen, takes place. This measurement impairment in the ion trap is attributable to the so-called space charge problem: in the detection of ions in the (electrical) FT ion trap, it is presupposed that the high-frequency alternating field E alone acts on the ions. In practice, this applies as long as there is only a limited quantity of charge carriers of the same sign in the FT ion trap.

The total number of charge carriers is referred to as the "space charge" or "ion cloud". The potential $\phi$ (E = -grad($\phi$)) that can be described via the Laplace equation and is derived from the high-frequency alternating field E is influenced by the space charge. This influencing of the storage potential $\phi$ by the space charge in a given volume within the FT ion trap is greater, the greater the space charge density $\rho$ (in As /m$^3$) in this volume and the weaker the mean restoring force in the corresponding part-volume originating from the high-frequency alternating field. From the Laplace equation for the high-frequency alternating field, it follows:

$$\text{div}(\text{grad}(\phi)) = \Delta\phi = -\rho/\varepsilon_o \neq 0, \tag{1}$$

where $\varepsilon_o$ represents the dielectric constant in the vacuum and $\phi$ represents the high-frequency alternating potential belonging to the alternating field E (see above). A large space charge can lead to a massive loss of ions and/or to the suppression of the measurement signals of small ion populations. To solve the problem of space charge, in DE 10 2015 208 188 A1 it is proposed that ion packets are spatially pulled apart with the aid of suitable SWIFT excitations.

Another possibility for solving the space charge problem lies in enlarging the ion storage cell that is available for storing the ions. To this end, so-called toroidal ion traps are used, cf. for example the article "Design, optimization and initial performance of a toroidal rf ion trap mass spectrometer", S.A. Lammert et al., International Journal of Mass Spectroscopy, 212 (2002) 25-40. In such ion traps, however, there is the problem that non-linear field sections prevent the mass resolution or sensitivity in the conduct of mass spectrometry. In the article cited, it is proposed to use an asymmetrical design of the toroidal ion trap in order to increase the mass resolution, cf. also the poster "Toroidal Multipole Expansion for the Design of Circular Ion Traps", Lammert et al., 62nd ASMS Conference, Baltimore, MD, 15-19 June 2014.

The stability of the ion trajectories in a toroidal ion trap is examined in the article "Computation of Mathieu stability plot for an arbitrary toroidal ion trap mass spectrometer", Appala Naidu Kotana et al., International Journal of Mass Spectrometry 414 (2017) 13-22.

US 2016/042935 A1 discloses an ion trap comprising an inner set of axially separated flat-shaped electrodes and an outer set of axially separated flat-shaped electrodes, which together define a ring-shaped ion storage cell.

Task of the invention

The task of the invention is to provide an ion trap and a mass spectrometer with such an ion trap, which enable both a high ion charge and high sensitivity in the detection of ions.

Object of the invention

This object is achieved by an ion trap according to Claim 1, which has a plurality of radially inner disk-shaped ring electrodes and a plurality of radially outer disk-shaped ring electrodes which delimit the ring-shaped ion storage cell. The ring-shaped ion storage cell is bounded on the inside in the radial direction by the inner disk-shaped and circular ring electrodes, and on the outside in the radial direction by the outer disk-shaped and circular ring electrodes. As a rule, the number of inner ring electrodes corresponds to the number of outer ring electrodes. The ion trap, or to put it more precisely, the two end cap electrodes and the ring electrodes, essentially run in rotational symmetry to a centrically arranged axis of symmetry of the ion trap. The two end cap electrodes delimit the (circular) ring-shaped ion storage cell in an axial direction. The two end cap electrodes respectively have a hyperbolically curved surface facing the ion storage cell.

Therein, disk-shaped refers to a substantially flat shape, i.e. the inner disk-shaped electrodes and similar the outer disk-shaped ring electrodes have a radial extension exceeding the axial extension by a factor of more than two, preferably more than five and more preferred by a factor of more than 10.

In particular, each of the inner ring electrodes and also each of the outer ring electrodes are separated from each other to be able to apply a different potential to each of the ring electrodes.

Through the circular geometry of the ion trap, the ion storage cell can be enlarged considerably compared with conventional 3D ion traps in the form of Paul traps.

In this way, the maximum ion charge of the ion trap can be increased by more than a factor of 5, or more than a factor of 10, compared with a conventional Paul trap. The ion trap with the disk-shaped ring electrodes can furthermore be manufactured in a simple manner. The spatially circular storage of ions in the ring-shaped ion storage cell also makes it possible to solve the space charge problem by means of a suitable circular enlargement of the ion storage cell - and thus a significant reduction of the space charge density $\rho$ - in an efficient manner. With appropriate driving of the ion trap that is designed as described above, at the same time the non-linear field sections in the ion storage cell can be suppressed and thus a high mass resolution or sensitivity of the ion trap can be achieved.

In the case of one embodiment, the inner ring electrodes and the outer ring electrodes are arranged at a constant radial distance from one another. The ion storage cell thus runs in a radial direction between a minimum radius that is determined by the radially outer end faces of the inner ring electrodes and a maximum radius that is determined by the radially inner end faces of the outer ring electrodes. In this way, ions circulate in the "cold, cooled" state in the ion trap on an orbit whose radius lies in the middle between the maximum radius and the minimum radius of the ion storage cell. Therein, the inner ring electrode and the outer ring electrode are separated by the ion storage cell.

In the case of a further embodiment, a radial distance between the inner ring electrodes and the outer ring electrodes is smaller than a radius of the ring-shaped end cap electrodes.

The radius of the end cap electrodes is understood to be the mean value between the maximum and minimum extensions of the end cap electrodes in the radial direction. This radius should correspond at least to the - generally constant - radial distance between the inner ring electrodes and the outer ring electrodes.

In the case of a further embodiment, in each case an inner ring electrode and an outer ring electrode are arranged on a common plane perpendicular to the axial direction. The planes in which the respective pairs of ring electrodes are arranged are aligned in parallel and arranged over one another, spaced apart from one another in an axial direction.

In the case of one embodiment, in each case an inner ring electrode and an outer ring electrode, i.e. a pair of ring electrodes, are connected to one another in an electrically conductive manner. The ring electrodes that are connected in an electrically conductive manner to one another have the same electrical potential. A respective pair of ring electrodes is preferably arranged in the common plane described above.

In the case of a further embodiment, the following applies for a width b of a respective first or second ring electrode in the radial direction and a distance d in the axial direction between, respectively, two adjacent first or second ring electrodes: d / b < 1 / 4. The distance d between the adjacent ring electrodes can for example be between approx. 100 $\mu$m and approx. 1 mm. The width b in the radial direction accordingly lies between approx. 400 $\mu$m and 4 mm. Through the open mechanical architecture of the ion trap (as far as possible, no "enclosed" spaces), on account of the disk-shaped ring electrodes spaced apart from one another ("discrete"), to produce the potential wells for the ions, a higher vacuum conductivity of the ion trap compared to conventional ion traps with solid ring electrodes can be ensured.

In the case of a further embodiment, the ion trap has a number N of radially inner ring electrodes and a number N of radially outer ring electrodes, for which the following applies: 10 < N < 200.

It has been shown that even a comparatively small number N of ring electrodes is sufficient to allow ions to circulate in the "cold, cooled" state on stable orbits in the ion storage cell.

In the case of a further embodiment, the first end cap electrode and/or the second end cap electrode is/are divided into at least two ring-shaped segments in the circumferential direction. The two or more segments typically extend in the circumferential direction over the same angle interval: if a respective end cap electrode is divided into two segments in the circumferential direction, both segments extend in the circumferential direction over an angle of approx. 180° and are electrically isolated from one another by a gap. Accordingly, three segments extend in each case over approx. 120°, four segments in each case over approx. 90° in the circumferential direction, etc. In the event that both end cap electrodes are segmented, the segments typically extend over the same angle range in the circumferential direction. On account of the segmentation, in time-multiplexing operation the end cap electrodes can optionally be used as excitation or detection or measurement electrodes. In this way, all customary Fourier transform measurement tools can be used in the case of the ion trap such as are used in a conventional FT ion trap (for example, ion filtration during ionisation or storage, separation of the ions and non-destructive detection).

In the case of a further embodiment, the ion trap additionally comprises an injection device for the preferably tangential, in particular pulsed injection of ions and/or an electron beam into the ring-shaped ion storage cell. The ions can be produced in an (external) ion source and introduced into the ring-shaped ion storage cell via the injection device. As a rule, injection of the ions takes place in a pulsed manner, i.e. via a pulsed supply, which for example can have a controllable valve.

The injection device can have an ion lens or the like in order to inject or shoot the ions on a straight trajectory into the ring-shaped ion storage cell, this lens being preferably oriented tangentially to the mean radius of the ring-shaped ion storage cell. The ions are preferably injected into the ring-shaped ion storage cell in an interspace between two outer ring electrodes that are spaced apart in an axial direction. Injection preferably takes place in a plane perpendicular to the axial direction, i.e. parallel to the ring electrodes.

The injection device can also serve to inject an electron beam into the ring-shaped ion storage cell, in order to produce ions directly in the ion trap, through impact ionisation. In this case, the gas that is to be analysed can be guided by means of the injection device into the ion storage cell before the ions are produced with the aid of the electron beam.

Another aspect of the invention relates to a mass spectrometer, comprising: an ion trap that is designed as described above, as well as an (electronic) control device that is designed to actuate the disk-shaped ring electrodes and the end cap electrodes of the ion trap for the storage, selection, excitation and/or detection of ions in the ring-shaped ion storage cell. The production of the HF storage field (see below) and of the necessary signals for the excitation, selection/separation and for the detection of the ions is realised with the aid of an electronic control device. To this end, the control device can comprise suitable hardware, e.g. electronic circuits, and/or software. As a rule, the signals for excitation, selection and detection are applied to the end cap electrodes or are tapped at the end cap electrodes. It is however also possible that for excitation of the ions, the control device provides an excitation signal at the ring electrodes.

For the excitation, as described above, at least one selective SWIFT ("Stored Wave Form Inverse Fourier Transform") excitation depending on the mass-to-charge ratio of the ions can be carried out, or possibly a broad-band one.

In the case of one embodiment, the control device is arranged at least partially within a volume area that is surrounded by the ring-shaped ion storage cell. The control device is preferably arranged in the centre of the ion trap or of the ring-shaped ion storage cell. The control device can for example be arranged in a separate vacuum area which for example is separated from the ring-shaped ion storage cell by means of a seal, through differential pumping or by a housing. The control device is however not necessarily arranged in the centre of the ion trap; rather, it or the components of the ion trap that are needed for actuating the ion trap can also be arranged elsewhere in the vicinity of the ion trap.

In the case of a further embodiment, the control device is designed to actuate the disk-shaped ring electrodes to produce a respective HF storage voltage to store ions in the ion storage cell. To this end, an electrical HF potential that is produced by an HF generator can be divided over the individual ring electrodes in an appropriate manner. Preferably, each of the inner ring electrodes are at different potentials. Similar, each of the outer ring electrodes are at different potentials. Preferably, the respective inner and outer ring electrodes are on the same electrical potential, an electrical potential $V_{RF,i}(t)$, for example running quadratically to i, can be applied to the i-th ring electrode; starting out from an HF potential $V_{RF}(t)$, e.g. a harmonic potential $V_{RF}(t) = V_{max} \sin(\omega t)$, for example, this is defined as follows:

$$V_{RF,i}(t) = V_{RF}(t)\ (1 - i^2 / N^2) \tag{2}$$

where the following applies for i: $-N \leq i \leq N$, i.e. there is a total number of 2N+1 inner ring electrodes and 2N+1 outer ring electrodes available, which are arranged equidistant from one another in an axial direction (in the Z direction); cf. also the article by M. Aliman and A. Glasmachers cited at the outset.

It is understood that the ring electrodes need not necessarily be arranged equidistantly and that HF voltage $V_{RF,i}(t)$ applied to a respective pair of inner and outer ring electrodes need not necessarily be divided up according to equation (2). The application of the voltage to the respective ring electrode can take place with the aid of a matching network and a voltage divider network, which for example has parallel-switched resistors and capacitors, as described in the article by M. Aliman and A. Glasmachers cited at the outset. With the aid of the HF storage field of the ring electrodes, it is possible to realise spatially circular ion storage, in which the ions move in the "cold, cooled" state along a circular orbit. Such an HF storage field has only comparatively small non-linear field sections, and therefore enables ion detection with high mass resolution.

In the case of one embodiment, the control device is designed, on the basis of ion signals recorded at different segments of the end cap electrodes, to determine a time-related dispersion of the ions that are injected in a pulsed manner into the ion storage cell. When the ions are injected in a pulsed manner, i.e. in the form of ion packets, into the ring-shaped ion storage cell - and thus initially excited - it can be determined on the basis of the recorded ion signals how the ion dispersion advances (more mobile ions advance more rapidly) with increasing storage time. It turns out to be advantageous here that a separate ion signal can be recorded at each segment of the end cap electrode(s).

In this way, it is possible for example to draw conclusions about the spatial distribution of the ion population and about pressure-dependant processes in the ion trap. In order to obtain conclusions about ion mobility, a time-limited cooling by a suitable braking gas (e.g. helium) can be introduced.

In the case of one embodiment, the control device is designed to deflect the electron beam that is injected tangentially into the ring-shaped ion storage cell along a circular trajectory. As has been described further above, for the flexible ion production and ion storage, at least one (pulsed) electron beam can be injected into the ion storage cell. Since, furthermore, the electrons (with elementary charge e; velocity $v_e$) are lighter than the ions that are to be detected by at least three to four orders of magnitude, it is possible to deflect the electron beam practically alone such that through the production of a sufficiently small, time-limited induction $8$ it is moved on a circular orbit and, in doing so, runs through all the segments of the ring-shaped ion storage cell when the Lorentz force $F$ acts on the electron beam, according to:

$$\vec{F} = -e(\vec{v_e} \times \vec{B}) \tag{3}$$

By forcing the electron beam onto a circular path, particularly effective electron ionisation can be achieved, and the flexibility in the production, storage and injection of the ions can be increased.

Further features and advantages of the invention follow from the following description of example embodiments of the invention.

Drawing

Example embodiments are shown in the schematic drawing and are explained in the following description. In the drawing,

Fig. 1 shows     a schematic representation of a cross-section of a mass spectrometer with an ion trap with a ring-shaped ion storage cell,

Fig. 2 shows     a top view onto the ring-shaped ion storage cell of Fig. 1 with a segmented end cap electrode, and

Fig. 3 shows     a detailed representation of several outer and inner disk-shaped ring electrodes which radially delimit the storage cell.

In the following description of the drawings, identical reference numbers are used for components that are identical or have the same function.

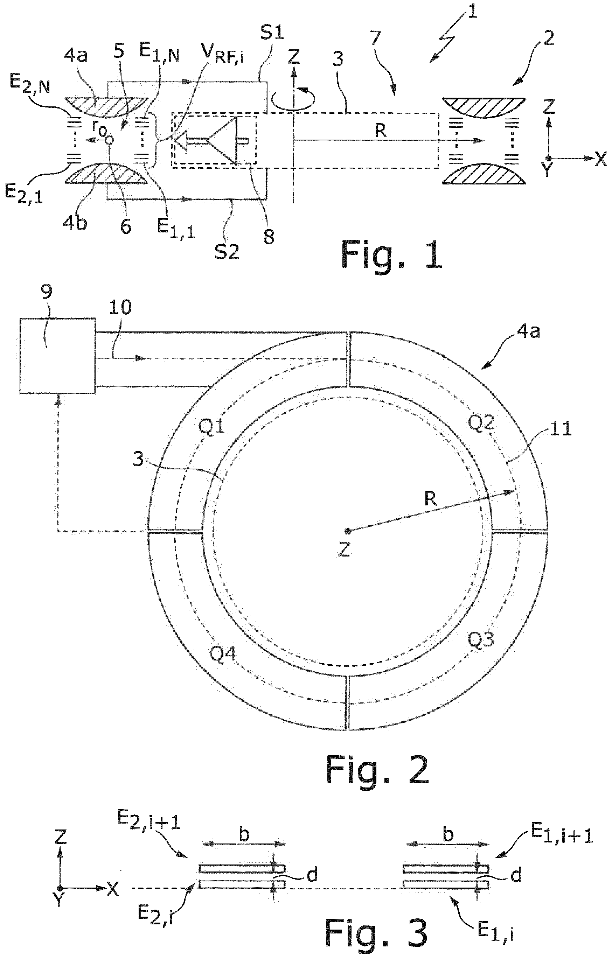

**Fig. 1** shows a schematic cross-sectional view of a mass spectrometer 1, which has an ion trap 2 as well as an electronic control device 3. The ion trap 2 comprises a first ring-shaped end cap electrode 4a that is at the top in an axial direction Z of an XYZ coordinate system, and a second ring-shaped end cap electrode 4b that is at the bottom in an axial direction Z, between which is formed a ring-shaped ion storage cell 5. The two end cap electrodes 4a, 4b respectively have a hyperbolically curved surface facing the ion storage cell 5, as is customary in the case of an ion trap in the form of a Paul trap.

The ring-shaped ion storage cell 5 runs radially symmetrical to the axial direction Z of the XYZ coordinate system. In the sectional illustration of Fig. 1, the radial direction corresponds to the X direction of the XYZ coordinate system. In the radial direction X, the ion storage cell 5 is bounded to the inside by a plurality or number N of radially inner disk-shaped ring electrodes $E_{1,i}$ (i = 1, ..., N) and to the outside by a plurality or number N of radially outer disk-shaped ring electrodes $E_{2,i}$ (i = 1, ..., N). The plurality N of radially inner ring electrodes $E_{1,i}$ are arranged over one another in the axial direction Z. Accordingly, the plurality N of radially outer ring electrodes $E_{2,i}$ are also arranged over one another in the axial direction Z.

The ring-shaped ion storage cell 5 has a constant extension in the radial direction X, which corresponds to the distance 2 $r_0$ between the inner and outer ring electrodes $E_{1,i}$, $E_{2,i}$. The radial distance 2 $r_0$ between the inner and outer ring electrodes $E_{1,i}$, $E_{2,i}$ here is less than the radius R of the two end cap electrodes 4a, 4b. The radius R of the end cap electrodes 4a, 4b, which corresponds to the mean radius R of the ion storage cell 5, runs in the radial direction X centrally through the two end cap electrodes 4a, 4b.

The ion storage cell 5 runs in the radial direction X between a minimum radius R - $r_0$, which is determined by the radially outer end faces of the inner ring electrodes $E_{1,i}$, and a maximum radius R + $r_0$, which is determined by the radially inner end faces of the outer ring electrodes $E_{2,i}$. Through the constant distance 2 $r_0$ between the ring electrodes $E_{1,i}$, $E_{2,i}$, it is made possible for the ions 6 in the "cold, cooled" state to circulate in the ion trap 2 in an orbit that corresponds to the mean radius R of the ring-shaped ion storage cell 5.

In the example shown, the number N of inner ring electrodes $E_{1,i}$ corresponds to the number N of outer ring electrodes $E_{2,i}$.

For the quantity N, in the example shown the following applies: 10 < N < 200. It has been shown that even a comparatively small number N of ring electrodes $E_{1,i}$, $E_{2,i}$ is sufficient to allow the ions 6 in the "cold, cooled" state to circulate on stable orbits in the ring-shaped ion storage cell 5.

As can be seen in Fig. 1 as well as in Fig. 3, the ring electrodes $E_{1,i}$, $E_{2,i}$ are arranged in pairs in common planes X, Y perpendicular to the axial direction Z. In each case two ring electrodes $E_{1,i}$, $E_{2,i}$ arranged in a common plane X, Y are connected to one another via an electrical lead or electrical contact, not shown in the drawing, i.e. they are on the same electrical potential. Electrical contact can also be effected via the control device 3. For the width b of a respective disk-shaped first ring electrode $E_{1,i}$ in the radial direction X and a distance d in an axial direction Z between, respectively, two adjacent first ring electrodes $E_{1,i}$, $E_{1,i+1}$, the following applies: d / b < 1 / 4. Accordingly, for the (identical) width b of the second ring electrodes $E_{2,i}$ and for a distance d in an axial direction Z between, respectively, two adjacent second ring electrodes $E_{2,i}$, $E_{2,i+1}$, the following likewise applies: d / b < 1 / 4.

The distance d between the adjacent ring electrodes $E_{1,i}$, $E_{1,i+1}$ or $E_{2,i}$, $E_{2,i+1}$ can for example be between approx. 100 $\mu$m and approx. 1 mm. The width b in the radial direction X is accordingly between approx. 400 $\mu$m and 4 mm. Through the open mechanical architecture of the ion trap 2 on account of the disk-shaped ring electrodes $E_{1,i}$, $E_{2,i}$ that are distanced from one another ("discrete"), to produce the potential wells for the ions 6, a higher vacuum conductivity of the ion trap 2 compared to conventional ion traps is ensured with a solid ring electrode.

As can be seen in Fig. 2, the first end cap electrode 4a is divided, in the circumferential direction, into four ring-shaped segments Q1, Q2, Q3, Q4, which extend in the circumferential direction in each case over an angle of 90°.

Accordingly, the second end cap electrode 4b too is divided into four ring-shaped segments Q1, Q2, Q3, Q4 (not shown in the drawing). On account of the segmentation, in the time-multiplexing operation of the control device 3, the end cap electrodes 4a, 4b can be used optionally as excitation, filtration or measurement electrodes.

The control device 3 is in signal connection with each of the four segments Q1, Q2, Q3, Q4 of the first end cap electrode 4a and with each of the four segments Q1, Q2, Q3, Q4 of the second end cap electrode 4b, in order to transmit excitation signals and to receive ion signals or measurement signals. By way of an example, Fig. 1 shows two such measurement signals S1, S2, which are produced by mirror charges of the excited ions 6 stored in the ion storage cell 5 and which originate from a respective first segment Q1 of the first or second end cap electrode 4a, 4b. On the basis of these ion signals S1, S2, which are typically evaluated differentially, and on the basis of additional ion signals recorded at the second to fourth segments Q2, Q3, Q4, a time-related dispersion (more mobile ions advance faster) of the ions 6 injected in a pulsed manner into the ring-shaped ion storage cell 5 can be established.

In this way - but also possibly where non-segmented end cap electrodes 4a, 4b are used - in the case of the ion trap 2 all customary Fourier transform measurement tools can be applied such as are used in a conventional FT ion trap, for example ion filtration during ionisation or storage, separation of ions and non-destructive detection. In particular, in the ion trap 2 SWIFT excitations can also be carried out, for example in the manner described in US 10,141,174 B4.

As has been described further above, the control device 3 typically actuates the end cap electrodes 4a, 4b or the respective segments Q1, Q2, Q3, Q4 of the end cap electrodes 4a, 4b for the selection, excitation and detection of the ions 6 in the ion storage cell 5. The control device 3 is also designed for storing the ions 6 in the ion storage cell 5. To this end, the control device 3 has an HF generator 8 as well as a resistance network in order to actuate the disk-shaped ring electrodes $E_{1,i}$, $E_{2,i}$ to produce a respective HF storage voltage $V_{RF,i}$ or to apply the corresponding HF storage voltage $V_{RF,i}$ to them. The splitting of a given e.g. harmonic HF storage voltage $V_{RF}(t) = V_{max} \sin (\omega t)$ over the individual ring electrodes $E_{1,i}$, $E_{2,i}$ or over the respective pairs of electrodes can for example take place in the manner described in the article by M. Aliman and A. Glasmachers cited above (in this case, or if equation (2) is used, the following applies for i: - N / 2 < i < N / 2). It is understood that the splitting of the HF storage voltage $V_{RF}(t)$ over the respective HF storage voltages $V_{RF,i}$ of the individual ring electrodes $E_{1,i}$, $E_{2,i}$ can also take place in a manner other than that described here.

In the case of the example shown in Fig. 1 and Fig. 2, the control device 3 is arranged wholly within a volume area 7 that is surrounded by the ring-shaped ion storage cell 5. The control device 3 is arranged in the centre of the ion trap 2 or ring-shaped ion storage cell 5, and does not project beyond the ring-shaped ion storage cell 5 in the axial direction Z. The control device 3 can for example be arranged in a separate vacuum area, which for example is separated from the ring-shaped ion storage cell 5 by a seal, by differential pumping or by a housing. Through this arrangement of the control device 3, a particularly compact mass spectrometer 1 can be achieved.

The control device 3 is also designed to actuate an injection device 9 that is shown in Fig. 2, and which in the example shown, serves for the tangential, typically pulsed, injection of ions 6 into the ring-shaped ion storage cell 5. The injection device 9 can have a controllable, in particular pulsed inlet or inlet system, e.g. a controllable valve, in order to inject the ions 6 of the gas that is to be analysed, which are produced by an (external) ion source that is not shown in the drawing, into the mass spectrometer 1 or into the ring-shaped ion storage cell 5. To this end, the injection device 9 can have in particular an ion lens, not shown in the drawing, which injects the ions 6 into the ring-shaped ion storage cell 5 on a straight trajectory that is aligned tangentially to the mean radius R of the ring-shaped ion storage cell 5, as can be seen in Fig. 2.

In the example shown, the ions 6 are injected in a plane X,Y perpendicular to the axial direction Z and in an axial direction Z centrally between the end cap electrodes 4a, 4b, so that the ions 6 move in a non-excited state on a circular trajectory 11 in the middle of the ion storage cell 5.

In the example shown here, the distance d between the adjacent outer ring electrodes $E_{2,i}$, $E_{2, i+1}$ is chosen to be sufficiently large to inject the ions 6 between two adjacent ring electrodes $E_{2,i}$, $E_{2,i+1}$ into the ring-shaped ion storage cell 5, i.e. it is not necessary to provide an additional entrance for the injection of the 6 into the ring-shaped ion storage cell 5.

The mass spectrometer 1 and in particular the ring-shaped ion storage cell 5 are arranged in a housing, not shown in the drawing, which separates the mass spectrometer 1 from its surroundings, for example from a process chamber, with the gas that is to be analysed.

With the aid of vacuum pumps that are not shown in the drawing, a vacuum is produced in the ion trap 2 and in particular in the ion storage cell 5. Therefore apart from the ions 6 of the gas that is to be analysed, in the ion storage cell 5 there is only a background gas which typically has a very low pressure.

In the example shown here, the injection device 9 is designed, in addition to the injection of ions 6, for the production and injection of an electron beam 10 into the ring-shaped ion storage cell 5. The electron beam 10 too is supplied tangentially to the ion storage cell 5, as can be seen in Fig. 2. The control device 3 actuates the end cap electrodes 4a, 4b, in order to produce a Lorentz force on the electron beam 10 according to the above equation (3), and to deflect it onto a circular trajectory 11 in the ion storage cell 5. The electron beam 10 serves to produce ions 6 directly in the ion storage cell 5 through impact ionisation. The production of the ions 6 in the ion storage cell 5 can take place on a neutral gas that is to be analysed, which is supplied to the ion storage cell 5 via the injection device 9 or possibly via another entrance, before the ions 6 of the gas that is to be analysed are produced *in situ* in the ion storage cell 5 with the aid of the electron beam 10.

In summary, with the aid of the ring-shaped or circular ion trap 2 described above, the available ion storage cell 5 can be significantly enlarged without significant enlargement of the construction space of the ion trap 2. Through the electronic control device 3, it is also possible to force spatial, circular ion storage, in which the ions 6 move, pictorially, in a circular orbit. In this way, a circular enlargement of the ion storage cell 5 is achieved, the space charge problem is minimised, and thus the measurement resolution is increased as compared with conventional FT ion traps.

## Claims

**1.** Ion trap (2), comprising:

a first ring-shaped end cap electrode (4a) and a second ring-shaped end cap electrode (4b), between which is formed a ring-shaped ion storage cell (5), wherein the two end cap electrodes (4a, 4b) respectively have a hyperbolically curved surface facing the ion storage cell (5) and **characterised by**

a plurality (N) of radially inner disk-shaped ring electrodes ($E_{1,i}$) and a plurality (N) of radially outer disk-shaped ring electrodes ($E_{2,i}$) that delimit the ring-shaped ion storage cell (5), wherein the the inner disk-shaped ring electrodes ($E_{1,i}$) and the outer disk-shaped ring electrodes ($E_{2,i}$) have a radial extension exceeding the axial extension by a factor of more than two.

2. Ion trap according to claim 1, in which the inner ring electrodes ($E_{1,i}$) and the outer ring electrodes ($E_{2,i}$) are arranged at a constant radial distance ($2\,r_0$) from one another.

3. Ion trap according to claim 1 or 2, in which a radial distance ($2\,r_0$) between the inner ring electrodes ($E_{1,i}$) and the outer ring electrodes ($E_{2,i}$) is smaller than a radius (R) of the ring-shaped end cap electrodes (4a, 4b).

4. Ion trap according to one of the preceding claims, in which in each case an inner ring electrode ($E_{1,i}$) and an outer ring electrode ($E_{2,i}$) are arranged on a common plane (X, Y) perpendicular to an axial direction (Z).

5. Ion trap according to one of the preceding claims, in which in each case an inner ring electrode ($E_{1,i}$) and an outer ring electrode ($E_{2,i}$) are connected to one another in an electrically conductive manner.

6. Ion trap according to one of the preceding claims, in which for a width b of a respective disk-shaped first or second ring electrode ($E_{1,i}$, $E_{2,i}$) and a distance d in the axial direction (Z) between, respectively, two adjacent first or second ring electrodes ($E_{1,i}$, $E_{1,i+1}$; $E_{2,i}$, $E_{2,i+1}$), the following applies: $d / b < 1 / 4$.

7. Ion trap according to one of the preceding claims, which has a number N of radially inner ring electrodes ($E_{1,i}$) and a number N of radially outer ring electrodes ($E_{2,i}$), for which the following applies: $10 < N < 200$.

8. Ion trap according to one of the preceding claims, in which the first end cap electrode (4a) and/or the second end cap electrode (4b) are divided into at least two ring-shaped segments (Q1, Q2, Q3, Q4) in the circumferential direction.

9. Ion trap according to one of the preceding claims, further comprising:
at least one injection device (9) for the preferably tangential, particularly pulsed, injection of ions (6) and/or of an electron beam (10) into the ring-shaped ion storage cell (5).

10. Mass spectrometer (1), comprising:
an ion trap (2) according to one of the preceding claims, as well as a control device (3) that is designed to actuate the disk-shaped ring electrodes ($E_{1,i}$, $E_{2,i}$) and the end cap electrodes (4a, 4b) for the storage, selection, excitation and/or detection of ions (6) in the ring-shaped ion storage cell (5).

11. Mass spectrometer according to claim 10, in which the control device (3) is arranged at least partially within a volume area (7) that is surrounded by the ring-shaped ion storage cell (5).

12. Mass spectrometer according to claim 10 or 11, in which the control device (3) is designed to actuate the disk-shaped ring electrodes ($E_{1,i}$, $E_{2,i}$) to produce a respective HF storage voltage ($V_{RF,i}$) to store ions (6) in the ion storage cell (5).

13. Mass spectrometer according to one of the claims 10 to 12, in which the control device (3) is designed, on the basis of ion signals (S1, S2) recorded at different segments (Q1, Q2, Q3, Q4) of the end cap electrodes (4a, 4b), to determine a time-related dispersion of the ions (6) that are injected in a pulsed manner into the ion storage cell (5).

14. Mass spectrometer according to one of the claims 10 to 13, in which the control device (3) is designed to divert the electron beam (10) injected tangentially into the ring-shaped ion storage cell (5) along a circular trajectory (11).

**Patentansprüche**

1. Ionenfalle (2), die Folgendes aufweist:

eine erste ringförmige Endkappenelektrode (4a) und eine zweite ringförmige Endkappenelektrode (4b), zwischen denen eine ringförmige Ionenspeicherzelle (5) gebildet ist, wobei die beiden Endkappenelektroden (4a, 4b) jeweils eine hyperbolisch gekrümmte, der Ionenspeicherzelle (5) zugewandte Oberfläche haben, und **gekennzeichnet durch**

eine Mehrzahl (N) radial innerer scheibenförmiger Ringelektroden ($E_{1,i}$) und eine Mehrzahl (N) radial äußerer scheibenförmiger Ringelektroden ($E_{2,i}$), die die ringförmige Ionenspeicherzelle (5) begrenzen, wobei die inneren scheibenförmigen Ringelektroden ($E_{1,i}$) und die äußeren scheibenförmigen Ringelektroden ($E_{2,i}$) eine radiale Ausdehnung haben, die die axiale Ausdehnung um einen Faktor von mehr als zwei übersteigt.

2. Ionenfalle nach Anspruch 1, bei der die inneren Ringelektroden ($E_{1,i}$) und die äußeren Ringelektroden ($E_{2,i}$) in einem konstanten radialen Abstand ($2\,r_0$) zueinander angeordnet sind.

3. Ionenfalle nach Anspruch 1 oder 2, bei der ein radialer Abstand ($2\,r_0$) zwischen den inneren Ringelektroden ($E_{1,i}$) und den äußeren Ringelektroden ($E_{2,i}$) kleiner ist als ein Radius (R) der ringförmigen Endkappenelektroden (4a, 4b).

4. Ionenfalle nach einem der vorhergehenden Ansprüche, bei der jeweils eine innere Ringelektrode ($E_{1,i}$) und eine äußere Ringelektrode ($E_{2,i}$) in einer gemeinsamen Ebene (X, Y) senkrecht zu einer axialen Richtung (Z) angeordnet sind.

5. Ionenfalle nach einem der vorhergehenden Ansprüche, bei der jeweils eine innere Ringelektrode ($E_{1,i}$) und eine äußere Ringelektrode ($E_{2,i}$) elektrisch leitend miteinander verbunden sind.

6. Ionenfalle nach einem der vorhergehenden Ansprüche, bei der füreme Breite b einer jeweiligen scheibenförmigen ersten oder zweiten Ringelektrode ($E_{1,i}$, $E_{2,i}$) und einen Abstand d in der axialen Richtung (Z) zwischen jeweils zwei benachbarten ersten oder zweiten Ringelektroden ($E_{1,i}$, $E_{1,i+1}$; $E_{2,i}$, $E_{2,i+1}$) gilt: $d\,/\,b < 1\,/\,4$.

7. Ionenfalle nach einem der vorhergehenden Ansprüche, die eine Anzahl N von radial inneren Ringelektroden ($E_{1,i}$) und eine Anzahl N von radial äußeren Ringelektroden ($E_{2,i}$) aufweist, für die folgendes gilt: $10 < N < 200$.

8. Ionenfalle nach einem der vorhergehenden Ansprüche, bei der die erste Endkappenelektrode (4a) und/oder die zweite Endkappenelektrode (4b) in Umfangsrichtung in mindestens zwei ringförmige Segmente (Q1, Q2, Q3, Q4) unterteilt sind.

9. Ionenfalle nach einem der vorhergehenden Ansprüche, die ferner Folgendes aufweist:
mindestens eine Injektionsvorrichtung (9) zur vorzugsweise tangentialen, insbesondere gepulsten, Injektion von Ionen (6) und/oder eines Elektronenstrahls (10) in die ringförmige Ionenspeicherzelle (5).

10. Massenspektrometer (1), das Folgendes aufweist:
eine Ionenfalle (2) nach einem der vorhergehenden Ansprüche sowie eine Steuervorrichtung (3), die dazu ausgebildet ist, die scheibenförmigen Ringelektroden ($E_{1,i}$, $E_{2,i}$) und die Endkappenelektroden (4a, 4b) zur Speicherung, Selektion, Anregung und/oder Detektion von Ionen (6) in der ringförmigen Ionenspeicherzelle (5) anzusteuern.

11. Massenspektrometer nach Anspruch 10, bei dem die Steuervorrichtung (3) zumindest teilweise innerhalb eines Volumenbereichs (7) angeordnet ist, der von der ringförmigen Ionenspeicherzelle (5) umgeben ist.

12. Massenspektrometer nach Anspruch 10 oder 11, bei dem die Steuervorrichtung (3) dazu ausgebildet ist, die scheibenförmigen Ringelektroden ($E_{1,i}$, $E_{2,i}$) zum Erzeugen einer jeweiligen HF-Speicherspannung ($V_{RF,i}$) zur Speicherung von Ionen (6) in der Ionenspeicherzelle (5) anzusteuern.

13. Massenspektrometer nach einem der Ansprüche 10 bis 12, bei dem die Steuervorrichtung (3) dazu ausgebildet ist, auf Basis von Ionensignalen (S1, S2), die an verschiedenen Segmenten (Q1, Q2, Q3, Q4) der Endkappenelektroden (4a, 4b) aufgenommen sind, eine zeitliche Verteilung der gepulst in die Ionenspeicherzelle (5) injizierten Ionen (6) zu bestimmen.

14. Massenspektrometer nach einem der Ansprüche 10 bis 13, bei dem die Steuervorrichtung (3) dazu ausgebildet ist, den tangential in die ringförmige Ionenspeicherzelle (5) injizierten Elektronenstrahl (10) entlang einer Kreisbahn (11) abzulenken.

**Revendications**

1. Piège à ions (2), comprenant

   une première électrode d'extrémité (4a) annulaire et une deuxième électrode d'extrémité (4b) annulaire, entre lesquelles est formée une cellule de stockage d'ions (5) annulaire,
   dans laquelle les deux électrodes d'extrémité (4a, 4b) présentent chacune une surface à courbure hyperbolique tournée vers la cellule de stockage d'ions (5),
   **caractérisé par** une pluralité (N) d'électrodes annulaires en forme de disque radialement intérieures ($E_{1,i}$) et par une pluralité (N) d'électrodes annulaires en forme de disque radialement extérieures ($E_{2,i}$) qui délimitent la cellule de stockage d'ions (5) annulaire, sachant que les électrodes annulaires en forme de disque intérieures ($E_{1,i}$) et les électrodes annulaires en forme de disque extérieures ($E_{2,i}$) ont une extension radiale qui dépasse l'extension axiale d'un facteur de plus de deux.

2. Piège à ions selon la revendication 1,
   dans lequel les électrodes annulaires intérieures ($E_{1,i}$) et les électrodes annulaires extérieures ($E_{2,i}$) sont disposées à une distance radiale constante ($2 r_0$) les unes des autres.

3. Piège à ions selon la revendication 1 ou 2,
   dans lequel une distance radiale ($2 r_0$) entre les électrodes annulaires intérieures ($E_{1,i}$) et les électrodes annulaires extérieures ($E_{2,i}$) est inférieure à un rayon (R) des électrodes d'extrémité (4a, 4b) annulaires.

4. Piège à ions selon l'une des revendications précédentes,
   dans lequel, dans chaque cas, une électrode annulaire intérieure ($E_{1,i}$) et une électrode annulaire extérieure ($E_{2,i}$) sont disposées sur un plan commun (X, Y) perpendiculaire à une direction axiale (Z).

5. Piège à ions selon l'une des revendications précédentes,
   dans lequel, dans chaque cas, une électrode annulaire intérieure ($E_{1,i}$) et une électrode annulaire extérieure ($E_{2,i}$) sont reliées l'une à l'autre de manière électriquement conductrice.

6. Piège à ions selon l'une des revendications précédentes,
   dans lequel, pour une largeur b d'une première ou d'une deuxième électrode annulaire en forme de disque ($E_{1,i}$, $E_{2,i}$) et pour une distance d dans la direction axiale (Z) entre, respectivement, deux premières ou deux deuxièmes électrodes annulaires adjacentes ($E_{1,i}$, $E_{1,i+1}$ ; $E_{2,i}$, $E_{2i+1}$), la formule suivante s'applique : d / b < 1 / 4.

7. Piège à ions selon l'une des revendications précédentes,
   comprenant un nombre N d'électrodes annulaires radialement intérieures ($E_{1,i}$) et un nombre N d'électrodes annulaires radialement extérieures ($E_{2,i}$), pour lesquelles s'applique ce qui suit : 10 < N < 200.

8. Piège à ions selon l'une des revendications précédentes,
   dans lequel la première électrode d'extrémité (4a) et/ou la deuxième électrode d'extrémité (4b) sont divisées en au moins deux segments annulaires (Q1, Q2, Q3, Q4) dans la direction circonférentielle.

9. Piège à ions selon l'une des revendications précédentes,
   comprenant en outre :
   au moins un dispositif d'injection (9) pour l'injection, de préférence tangentielle, en particulier pulsée, d'ions (6) et/ou d'un faisceau d'électrons (10) dans la cellule de stockage d'ions (5) annulaire.

10. Spectromètre de masse (1) comprenant :
    un piège à ions (2) selon l'une des revendications précédentes, ainsi qu'un dispositif de commande (3) conçu pour actionner les électrodes annulaires en forme de disque ($E_{1,i}$, $E_{2,i}$) et les électrodes d'extrémité (4a, 4b) pour le stockage, la sélection, l'excitation et/ou la détection d'ions (6) dans la cellule de stockage d'ions (5) annulaire.

11. Spectromètre de masse selon la revendication 10,
    dans lequel le dispositif de commande (3) est disposé au moins partiellement dans une zone volumique (7) qui est entourée par la cellule de stockage d'ions (5) annulaire.

12. Spectromètre de masse selon la revendication 10 ou 11,

dans lequel le dispositif de commande (3) est conçu pour actionner les électrodes annulaires en forme de disque ($E_{1,i}$, $E_{2,i}$), afin de générer une tension de stockage HF respective ($V_{RF,i}$) pour stocker les ions (6) dans la cellule de stockage d'ions (5).

13. Spectromètre de masse selon l'une des revendications 10 à 12,
dans lequel le dispositif de commande (3) est conçu, sur la base des signaux ioniques (S1, S2) enregistrés sur différents segments (Q1, Q2, Q3, Q4) des électrodes d'extrémité (4a, 4b), pour déterminer une dispersion temporelle des ions (6) qui sont injectés de manière pulsée dans la cellule de stockage d'ions (5).

14. Spectromètre de masse selon l'une des revendications 10 à 13,
dans lequel le dispositif de commande (3) est conçu pour dévier le faisceau d'électrons (10), injecté tangentiellement dans la cellule de stockage d'ions (5) annulaire, le long d'une trajectoire circulaire (11).

Fig. 1

Fig. 2

Fig. 3

## REFERENCES CITED IN THE DESCRIPTION

### Patent documents cited in the description

- US 9035245 B2
- US 10141174 B2
- DE 102015208188 A1
- US 2016042935 A1
- US 10141174 B4

### Non-patent literature cited in the description

- **M. ALIMAN ; A. GLASMACHERS.** A novel electric ion resonance cell design with high signal-to-noise ratio and low distortion for Fourier transform mass spectrometry. *Journal of the American Society for Mass Spectrometry,* October 1999, vol. 10 (10
- **F. GROSSMANN et al.** Harmonic inversion of semiclassical short time signals. *Phys. Lett.,* 1997, vol. 279, 355-360
- **S.A. LAMMERT et al.** Design, optimization and initial performance of a toroidal rf ion trap mass spectrometer. *International Journal of Mass Spectroscopy,* 2002, vol. 212, 25-40
- **LAMMERT et al.** Toroidal Multipole Expansion for the Design of Circular Ion Traps. *62nd ASMS Conference, Baltimore, MD,* 15 June 2014
- **APPALA NAIDU KOTANA et al.** Computation of Mathieu stability plot for an arbitrary toroidal ion trap mass spectrometer. *International Journal of Mass Spectrometry,* 2017, vol. 414, 13-22